# EUROPEAN PATENT APPLICATION

(11) **EP 1 355 231 A2**
(43) Date of publication of application: **22.10.2003**
(21) Application number: 01127354.7
(22) Date of filing: 21.11.2001
(51) Int. Cl.: G06F 9/44, G06F 17/30

(54) **Processing data files using plug-ins**

(71) Applicant: Sun Microsystems, Inc., Palo Alto, California 94303 (US)
(72) Inventor: Laux, Thorsten O., 20099 Hamburg (DE); Halama, Ingrid, 22307 Hamburg (DE)
(74) Representative: HOFFMANN - EITLE

(57) **Abstract**

To ensure compatibility between different processing elements for handling a data file having a specific file type, a plurality of implementation modules for processing the data file is provided. For each implementation module a sub file type is obtained and registered to the implementation module. An implementation module compatible to a cooperating application is activated using the associated sub file type. Thus, in a distributed system, different implementation modules may be provided for different versions of an operating application and a compatibility between the processing elements can be ensured while avoiding the requirement of a full downward compatibility.

## Description

### [Field of the Invention]

The present application relates to a method and apparatus for processing a data file, e.g. in a distributed environment.

### [Background of the Invention]

Data processing devices are used for the widest range of increasingly versatile applications, providing services ranging from, for example, editing of text documents or spread sheet applications, to complex software systems, e.g. for computer aided design or manufacturing, purchasing, computer aided banking applications and similar. Further, increasingly complex applications are employed in the field of personal services, for example for personal data organization, mobile communication applications, such as applications in association with mobile telephones or handheld computing devices, and communication services and other services, provided over a computer network.

In the above outlined examples, different modules of an application or different applications may be executed and interact on a data processing device to provide a particular service. Further, in particular in a distributed environment involving the processing of information at different physical locations with a plurality of data processing devices, a number of different applications or modules of one application may reside on different data processing devices and may interact and cooperate via a computer network to provide a particular service.

In the above cases of interacting applications or modules, it is important that compatibility between the different applications or modules is always ensured. To ensure compatibility, modules or applications should for example be able to agree on a communication protocol to exchange data, be able to use the same data formats for calls or requests and similar. Moreover, to allow a correct routing of calls or requests, i.e. to ensure that the modules or applications always communicate with the correct counterpart, it is necessary that applications or modules cooperating with one another hold all necessary information on the respective counterparts.

As an example a text processing application can be considered. If a user selects a text document and issues an instruction to open the same, e. g. using a mouse and cursor, a keyboard or similar, the text processing application generally retrieves and displays the document. Normally the user may then edit this document using, e.g. editing commands input through the keyboard, while reviewing changes to the text document on a display.

For providing a text processing service like the above a number of different modules may cooperate with one another, for example modules for displaying information, processing user input information, modifying the data file, storing operations and similar.

A problem may occur, if some of the modules or applications of the text processing application are modified or updated, while others remain unchanged. In this case appropriate steps must be taken to maintain compatibility between the individual elements of the text processing application.

For example, a first part or module of the text processing application could be located at a client unit and be responsible for displaying the text document, whereas another part or module of the text processing application may be executed at a server unit, e.g. being responsible for rendering operations or for processing editing commands and similar. In this case the individual components may very well be updated or modified individually. For example modules at the server unit could be updated while the modules at the client unit remain unchanged.

Moreover, it is possible that a client unit cooperates with different server units in editing different text documents, either concurrently or sequentially. In this case different versions or modifications of the text processing application may be installed on different servers and it must be ensured that the client unit can cooperate with each of the server units with the different versions or modifications of the text processing application.

While a text processing application is considered for illustration, the same applies to any user application, and applies also to different operating systems of different data processing devices. For example, a client unit could be required to communicate with different operating systems at different server units, e.g. in order to obtain the same service or different services from server units.

When exchanging or updating parts of an application, or in the case of different operating systems or operating programs, it is generally possible to ensure a downward compatibility, i.e. to ensure that a newly introduced module or application is able to communicate and cooperate with all other applications or modules. If for example in the above text processing application a display module for displaying information is replaced in an update operation or if it is modified, it is necessary that all other parts of the text processing application interacting with the display module can still communicate and cooperate with the new display module. To ensure this, the new display module must be downward compatible.

While downward compatibility may already pose a problem in a comparatively small application, such as the above-outlined text processing application executed on a single data processing device, this becomes a potentially severe problem in a complex environment, for example if a large and complex service application is executed on one or a plurality of data processing devices. In distributed environments it may be very difficult to maintain compatibility between all versions of all modules at all times. Full compatibility between all elements of an application may require substantial programming efforts and may thus be very cost intensive.

### [Summary of the Invention]

It is therefore desirable to ensure processing of a data file while facilitating compatibility and cooperation between different modules of an application.

According to an example, a method for processing a data file having a specific file type includes obtaining a sub file type for each one of a plurality of implementation modules for processing the data file; activating one of the implementation modules using its sub file type; and processing the data file using the activated implementation module. By providing different implementation modules, a specific one of the implementation modules may be selected for processing the data file. Further, the different implementation modules may be activated using sub file types. Thus, instead of providing e.g. a downward compatibility, different implementation modules for processing the data file are provided, and an appropriate one can be selected through use of the sub file type.

The implementation modules may constitute different release versions or instances of a version of a module or modifications of a module. Accordingly, an implementation module may be constituted by any variation of a module for providing a particular functionality.

Further, the implementation modules may be adapted to cooperate with specific installation operating applications. The installation operation applications may constitute one of the group consisting of: - release versions of an operating application; - instances of release versions of an operating application; and - modifications of an operating application. Thus, a particular implementation module may be specifically adapted to cooperate with a release version, instance of a release version or modification of an operating application, e.g. a service application or operating system, for example provided by different vendors or manufacturers.

The method may include receiving from a server unit or configuration file information about a sub file type to be registered to the implementation module. By providing information about a sub file type, an association between the sub file types and the implementation modules may be established, facilitating activation of a desired one of the implementation modules, e.g. through use of a network protocol.

Further, a unique name for the implementation module may be obtained, corresponding to the sub file type. This may facilitate local handling of the implementation module, e. g. in a file system in a data processing unit.

The sub file type for an implementation module may be dynamically generated during installation of a server installation operating application, and, upon installation of a client installation operating application, the sub file type may be registered to the implementation module. Accordingly, in a client and server scenario, during server installation a sub file type may be generated for a particular implementation module, and this sub file type, notified to a client unit, may be registered to the implementation module during installation of a client installation operating application.

The implementation module may be activated in response to receiving an instruction including the sub file type registered to the implementation module. Thus, during operations, an instruction including the sub file type may suffice to activate the implementation module.

Further, a server installation operating application may be located at a server unit; and a client installation operating application and an implementation module may be located at a client unit, for cooperating with this server installation operating application. Thus, cooperating pairs of client and server installation operating applications may be provided, together with associated implementation modules.

The client installation operating application and the server installation operating application may constitute one of the group consisting of: - release versions of an operating application; - instances of release versions an operating application; and - modifications of an operating application. Accordingly, similar to the implementation modules, the client and server installation operating applications may constitute any variation of an operating application, e. g. for providing a service, such as text editing, or for an operating system. A client unit may include at least one client installation operating application, each one of the client installation operating applications cooperating with at least one server installation operating application. Thus, there may be a one to one cooperation between client and server or a plurality of servers may cooperate with a single client.

A processing unit may include a browser application, and the implementation modules may be constituted by implementation plug-ins or activeX controls. Accordingly, standard functionality of a browser application may be employed, and the implementation modules may constitute plug-ins for the browser application.

The data file may include at least one of or a combination of: - any collection of data in any form; - a command; and - a command together with additional parameters.

The processing of the data file may include at least one of: - executing any action as reaction on receiving the data file; - manipulating or editing the data file; - processing information included in the data file; - transferring the data file; and - generating screen elements on a display. Thus, the implementation module may perform any kind of operation on the data file or perform any kind of action as reaction on receiving the data file, the data file including any kind of content.

According to another example a method for processing a data file having a specific file type includes obtaining a sub file type for one of a plurality of implementation modules for processing the data file; activating the implementation module using its sub file type; and processing the data file using the activated implementation module.

According to yet another example, a processing unit for processing a data file having a specific file type may include a plurality of implementation modules for processing the data file; a control unit for obtaining a sub file type for each implementation module and for effecting activation of one of the implementation modules using the sub file type; and wherein the activated implementation module is adapted to process the data file.

According to another example, a server unit for effecting processing of a data file having a specific file type includes a server control unit for selecting a sub file type of at least one of a plurality of implementation modules for processing the data file, the implementation modules to be located at a client unit; and a server installation operating application for transmitting the sub file type to the client unit for effecting activation of a corresponding one of the implementation modules, the activated implementation module being adapted to process the data file.

Further advantageous features of the invention are disclosed in further dependent claims.

### [Brief Summary of the Drawings]

- Fig. 1: shows elements of a processing unit for processing a data file according to an embodiment of the invention;
- Fig. 2: shows elements of a server unit for processing a data file according to an embodiment of the invention;
- Fig. 3: shows operations of a method for processing a data file, particularly outlining operations at a processing unit, according to an embodiment of the invention;
- Fig. 4: shows operations of a method for processing a data file according to an embodiment of the invention, particularly outlining operations which may take place at a server unit;
- Fig. 5: shows elements of a system for processing a data file according to an embodiment of the invention, particularly showing a client and server scenario;
- Fig. 6: shows operations of a method for processing a data file according to another embodiment of the invention, particularly outlining operations during installation;
- Fig. 7: shows operations of a method for processing a data file according to another embodiment of the invention, particularly outlining operations at a server unit and client unit for processing the data file;
- Fig. 8: shows elements of system for processing a data file according to an embodiment of the invention, particularly outlining different client and server arrangements; and
- Fig. 9: shows elements of a system for processing a data file according to another embodiment of the invention, showing a network arrangement.

### [Detailed Description of the Preferred Embodiments]

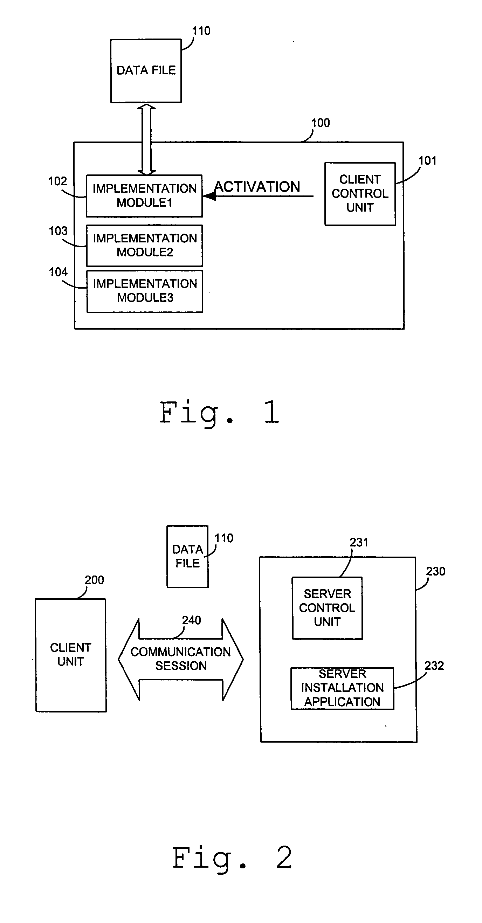

In the following an embodiment of the invention will be described with respect to Fig. 1.

The embodiment of Fig. 1 illustrates how a data file having a specific file type can be processed using sub file types of a plurality of implementation modules.

Fig. 1 shows a processing unit 100 for processing a data file having a specific file type. The processing unit includes a client control unit 101 and a plurality of implementation modules 102, 103, and 104. The control unit is arranged for obtaining a sub file type for each implementation module, the sub file types either being generated internally or obtained from an external location. Further, the control unit is arranged for activating one of the implementation modules using the sub file type. The activated implementation module then processes a data file 110. Differently put, each of the plurality of implementation modules may be registered with it's sub file type to the control unit and the control unit may be arranged to receive a request containing a sub file type.

In the present example the implementation module 102 is selected through use of the sub file type and activated for processing the data file 110. As each of the implementation modules is associated with a sub file type, the activation of desired one of the implementation modules may conveniently take place through use of the sub file type associated with the respective implementation module.

In the present embodiment the activation of the implementation module 102 will take place using the sub file type of the implementation module 102. This is an example only, in alternative embodiments it could be considered that other ones of the plurality of implementation modules, e.g. implementation module 103 is activated for processing the data file 110, using the sub file type associated with the implementation module 103.

The client control unit 101 activating the implementation modules may receive a corresponding activation instruction from an internal or external source, e. g. a service instruction including a sub file type for specifying one of the plurality of implementation modules. The activation instruction could thus specify an appropriate one of the implementation modules through use of a corresponding sub file type, being compatible with a source of the service request.

Thus, as opposed to the use of the file type of the data file for instructing processing operations, a technique which does not allow a selection of one of a plurality of implementation modules, the use of the sub file types associated with the plurality of implementation modules enables a selection of a compatible one of the implementation modules.

The implementation modules may constitute different release versions of a module, instances of a version of a module or modifications of a module. The module could for example be responsible to perform operations for at least one of - executing any action as reaction on receiving the data file; - manipulating or editing the data file; - processing information included in the data file; - transferring the data file; and - remote visualization.

Thus, the present example shows, how a cooperation and compatibility between different processing elements can be facilitated.

In the following, examples of the elements of the embodiment shown in Fig. 1 will be outlined in further detail. It is noted that the following description only constitutes examples and should not be construed as limiting the invention.

The processing unit 100 may be constituted by any kind of data processing device, such as a general purpose data processing device, a plurality of interconnected data processing devices, a mobile computing device, a personal data organizer, a mobile communication device, including mobile telephones and similar. The data processing device may be connected to other data processing devices (not shown) via any kind of communication link, including communication networks, connection less communication links, dedicated communication lines, wireless transmission links and similar.

While the data processing unit 100 may include the client control unit 101 and the implementation modules 102, 103, and 104, it is also possible that at least some of these elements are arranged at an external location, communicating with the data processing device through any kind of communication. Likewise, while the data file 110 is shown to be located at an external location, it is also possible that the data file forms part of the data processing device, e. g. stored in a memory of the data processing device.

The client control unit 101 is arranged for activating one of the implementation modules and for obtaining a sub file type for each of the implementation modules. The activation may be effected through the control unit via use of an appropriate one of the sub file types and/or a unique file name. For example, the control unit could receive an activation instruction including a sub file type and could look up a file name of the corresponding implementation module, for example in a registry.

The client control unit may be realized as an integral part of the data processing unit. For example, the client control unit 101 could be realized in association with a central processing unit and by corresponding software operations, or could be realized as a hardware device, located inside or outside the data processing unit. Further, the control unit could be realized partially in hardware and partially in software. Further, the client control unit may be a single entity or distributed, e.g. over a plurality of data processing devices.

For each implementation module, a sub file type should be generated or selected, which is unambiguous, or with little risk of being ambiguous. For example, a unit could generate a sub file type based on an ID of a processing unit and/or an IP address or similar.

Preferably, the sub file types for the implementation modules are unique, i.e. it is possible to activate exactly the desired one of the implementation modules through the associated sub file type. To fully eliminate the risk of an ambiguous association of sub file types with implementation modules the sub file types may be also generated or assigned for all available implementation modules at a central location.

The client control unit 101 or an installation application may receive a message or messages including sub file types to be associated with each of the plurality of implementation modules, and in response thereto, the client control unit 101 may register the sub file types to the implementation modules, e.g. in a binary manipulation operation of the implementation modules, or by entering data into a registry.

However, alternatively, it is also possible that the client control unit 101 itself generates the sub file types and registers the sub file types to the respective implementation modules. After the registration operation of the sub file types to the respective implementation modules, the implementation modules may each be activated through use of the respective sub file types.

To effect activation one of the implementation modules for processing the data file 110, the control unit may be arranged for receiving a service request to process the data file having one of a plurality of data file types.

Since the control unit is arranged for effecting activation of one of the implementation modules using a corresponding sub file type, the control unit facilitates compatibility between different processing elements for processing the data file, as, e. g. a requesting operating application may use a specific one of the sub file types to activate a compatible one of the implementation modules for processing the data file.

The implementation modules are responsible for processing the data file. As an example three implementation modules 102, 103 and 104 are shown in Fig. 1, however, an arbitrary number of implementation modules may be provided. An implementation module may be part of a larger application, e. g. a distributed application for handling the data file. The implementation modules 102, 103 and 104 may each be realized as an integral part of the data processing unit 100 or may be arranged at an external location. For example, the implementation modules may each be realized by a central processing unit and by corresponding software instructions, or could be realized as a hardware device, located inside or outside the data processing unit. Further, the implementation modules may each be partially realized in hardware and partially realized in software.

The implementation modules preferably perform defined operations on the data file. For example, the operations to be performed on the data file could include executing any action as reaction on receiving the data file, editing or manipulating a data file, processing information included in the data file, transferring the data file, generating screen elements on a display, remote visualization, or carrying out further instructions in connection with the data file.

In general, an implementation module will process or handle the data file specified, e. g. through a service request, in a defined way. It is possible that different implementation modules carry out substantially the same functionality in certain variations. For example, it is possible that a group of implementation modules constitutes individual modifications of a basic module for processing the data file. Further, the implementation modules may constitute different release versions of a module or different instances of versions of a module for processing the data file.

On the other hand, the implementation modules could stand for entirely different functionality to be performed in connection with a data file. For example, if a processing of a data file including scientific data of a particular data file type is requested, a first implementation module could perform a first processing operation on the data, and a second implementation module could perform a second processing operation on the data. Examples could be different transformations of data such as a fast Fourier transform, a Laplace transform and similar.

An implementation module itself may not necessarily be a single unit, but may itself be realized in different sub-modules, which may even be arranged in a distributed environment. Thus, an implementation module may only handle or supervise the processing of the data file by placing calls to further sub-modules.

A processing result generated by an implementation module may be delivered back to an application program or operating program involved in handling the data file, may result in a display operation of the data file or parts thereof, or of a processing result, or may result in further calls on further application programs or modules initiated by the selected implementation module.

In order to facilitate the activation of the selected implementation module, each implementation module is registered to a sub file type.

A data file type may define a known file type, e. g. may specify a known data format. For example, a file type could specify that the data file is a text document, contains video information, images, audio information, could specify that the data file contains data in a specific other format, that the data file includes commands for further processing, parameters, results of scientific applications and similar. The data file may be located at a arbitrary location, e. g. within a memory unit of the data processing device 100, or at an external memory unit. The implementation module activated for processing the data file may therefore retrieve the data file 110 from the memory unit, either through an internal connection or via a connection to an external data processing device, such as a communication line or communication network including wireless connections.

The sub file type may further define the data file type outlined above. Thus, a sub file type could define a sub-format of the format of the data file, e. g. a format according to a particular release version, instance of a release version or modification of the above-outlined data file type or format, or similar.

The sub file type may thus be conveniently used to uniquely identify one of the implementation modules. Preferably, the sub file type is used upon invoking or activating a corresponding implementation module, e. g. through the client control unit or an external location. For example, an application program involved in handling the data file could issue a request including the sub file type, and optionally the data file or parts thereof, leading to an activation of an implementation module associated with the sub file type. Activation of the correct implementation module could be effected through a look-up operation in a implementation module registry, the implementation module registry including information on sub file types and associated implementation modules.

A sub file type may also be constituted by a command type, allowing to transmit instructions, e.g., to the processing unit and/or an implementation module.

A data file may be any kind of digitised information, e.g., stored in a memory, on a disc, or provided in a form for transmission over a medium. The data file may also constitute or include dynamically generated information. Further, the data file may include or be constituted by any kind of data, including user data, commands or instructions, parameters or similar, or combinations thereof, e.g. commands including parameters. Moreover, the data file may include a plurality of individual elements, including information of the above outlined different kinds. It is also possible that the elements of the data file are in an overlapping form.

Thus, the data file may include at least one of or a combination of: - any collection of data in any form; - a command; and - a command together with additional parameters.

As briefly outlined before, the different implementation modules may each be adapted to cooperate with one of different or specific installation operation applications.

An installation operating application may be an application for handling the data file, such as an application for editing a text document, displaying image information or video information, playback of audio information, may be a scientific application, part of a banking application or any other distributed application, as outlined before. Further, an installation operating application may be at least part of an operating system of a data processing device.

Further, similar to the implementation modules constituting different release versions or modifications of a module, the installation operating applications may constitute different release versions of an operating application, instances of release versions of an operating application or modifications of an operating application.

Accordingly, compatible pairs of implementation modules and installation operating applications may be provided, for improving compatibility and easy cooperation between different elements involved in processing in the data file. Each installation operating application may have a corresponding implementation module adapted to cooperate therewith.

For example, a first vendor or manufacturer could provide a first installation operation application, e. g. a first version, instance or modification of a text processing application. A second vendor or manufacturer could provide a second installation operation application, constituting a second version, instance or modification of a text processing application. To avoid incompatibilities with a module, e. g. a module for displaying a text document, a first implementation module may be provided, compatible with the first installation operating application, and a second implementation module may be provided, compatible with the second installation operating application.

Accordingly, each vendor or manufacturer may provide a customized installation operating application matched by a corresponding implementation module.

The above described scheme is particularly advantageous in a distributed environment, e. g. involving a client unit and a server unit for handling a data file.

To avoid incompatibilities, compatible pairs of implementation modules and installation operating applications could be provided on the respective data processing devices, e. g. a server unit and a client unit and could operate in handling the data file. In order to select a correct implementation module for handling the data file, e. g. at the client unit, the sub file types associated with the implementation modules can be conveniently used.

It is noted that the above described elements and/or operations for handling a data file, including obtaining sub file types, activating implementation modules and processing the data file may at least partially be realised as software or hardware. I. e. controls can be carried out using dedicated hardware, or a correspondingly programmed data processing device or group of data processing devices.

Further, it is noted that a computer-readable medium may be provided having a program embodied thereon, where the program is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

In the following a further embodiment of the invention will be described with respect to Fig. 2.

Fig. 2 shows elements of a system for processing a data file according to another embodiment of the invention, particularly showing a client unit and server unit.

Fig. 2 shows a client unit 200, constituting the processing unit 100 of Fig. 1. Further Fig. 2 shows a data file 110, as already outlined with respect to Fig. 1, and therefore a detailed description of these elements is omitted here.

Further, Fig. 2 shows a server unit 230 including a server control unit 231 and a server installation operating application 232.

The server unit 230 may be any kind of server data processing device for cooperating with a large number of users. Thus, the server unit 230 preferably has large processing, storage and handling capabilities, to avoid delays in serving the large number of users.

The server control unit 231 is arranged for generating a sub file type for at least one of a plurality of implementation modules such as the implementation modules 102, 103 and 104 of the processing 100 shown in Fig. 1. Further, the server installation operating application 232 may be arranged for transmitting a sub file type to the client unit for effecting activation of a corresponding one of the implementation modules, the activated implementation module being adapted to process the data file, as outlined before with respect to Fig. 1. The server installation operating application may be a single entity or may be distributed, e.g., over a plurality of data processing devices. The sub file type transmitted from the server unit to the client unit may be included in a service request. The service request, besides including the sub file type, may include an identifier of the data file to be processed, and further information required for handling the data file.

The service request may be transmitted in connection with a communication session as illustrated by the arrow 240 shown in Fig. 2. The communication session between the client unit and the server unit may be established via any kind of communication link, including dedicated communication aligns, communication networks, such as a local area network and/or the internet, and may include wireless transmissions. The server installation operating application 232 may be a release version of an operating application, an instance of a release version of an operating application or a modification of an operating application. As outlined before, an operating application may be any kind of application for handling the data file, e.g. a text processing application, spread sheet application, scientific application, a banking application and similar. Further, the server installation operating application may be part of an operating system of the server unit.

If during operations the server installation operating application 232 requires services from the client unit, e.g. for displaying the data file 110, the server installation operating application may issue a corresponding instruction including a sub file type associated with an implementation module being compatible with the server installation operating application.

For example, the client unit 200 may be operated by a user and may be engaged in a communication session with the server unit 230. Further, as an example, it is assumed that the user issues a service request for editing a data file using a particular version of a text processing application located at the server unit. Further, it is assumed that display operations for displaying the data file at the client unit are provided by an implementation module.

In this case the particular version of the text processing application may retrieve and render the data file as appropriate, in preparation for a display at the client unit. Then, the version of the text processing application could issue an activation instruction towards the client unit, for effecting a display of the rendered data file, for editing purposes. In order to ensure that an implementation module compatible with the version of the text processing application is activated for displaying the data file, the server unit will preferably issue an activation request including the sub file type of an implementation module compatible with the version of the text processing application at the server unit.

At the client unit the corresponding implementation module will then be activated and display the data file for an editing operation.

The above example further illustrates how different implementation modules can be used for avoiding compatibility problems between different processing elements for handling a data file.

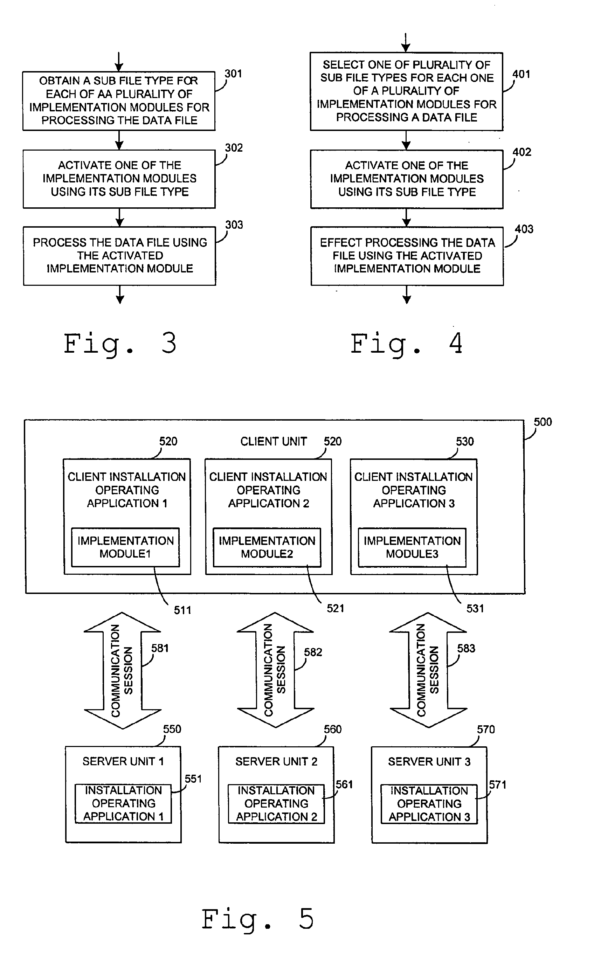

In the following a further embodiment of the invention will be described with respect to Fig. 3.

Fig. 3 shows operations of a method for processing a data file having a specific file type according to another embodiment of the invention, particularly showing operation which may be executed at a processing unit, such as the processing unit shown in Fig. 1. However, the operations shown in Fig. 3 are not limited thereto.

As outlined before, a processing unit, such as the processing unit 100 shown in Fig. 1 includes a plurality of implementation modules, which may constitute different release versions or instances of release versions of a module or different modifications of a module for handling a data file. The module for handling the data file may perform any kind of functionality, e. g. display operations at the processing unit 100, further handling of the data file and similar. Preferably, each one of the plurality of implementation modules can cooperate with another processing element for handling the data file, in order to ensure a compatibility between the different elements for processing the data file.

A plurality of implementation modules for processing the data file is provided, e. g. at the processing unit. However, it is also possible that the implementation modules are provided at an external location and can be accessed through a processing unit, if necessary. The implementation modules may be constituted by software instructions stored in a memory unit, to be retrieved an executed on a central processing unit upon demand. However, it is also possible that the implementation modules are at least partially realised in hardware.

In an operation 301 for each implementation module a sub file type is obtained for each one of the plurality of implementation modules for processing the data file. This sub file type may be generated at the processing unit, e.g. based on a name giving algorithm, e.g. using a serial number of a processing unit, an IP address or similar. Further, a central location maintaining information on all available implementation modules may be used, in order to ensure that each sub file type is definitely unique.

For example, the sub file types could be generated by the processing unit shown in Fig. 1, or by a server unit, such as the server unit 230 shown in Fig. 2. The sub file types and identifiers of the implementation modules may be stored in a registry, to facilitate activating a particular implementation module using one of the sub file types.

The sub file types may also be obtained from an external location, such as the server unit 230 of Fig. 2, in which case a sub file type to be associated with a particular implementation module could be transmitted from the server unit. Operation 301 ensures that associations between sub file types and implementation modules are established.

In an operation 302 one of the implementation modules is activated using the associated sub file type. The activation of the implementation module may take place in association with handling the data file, e. g. through an installation operating application, as outlined before. The installation operating application may generate and transmit an activation instruction to the processing unit, which based on the sub file type will activate the correct implementation module.

In an operation 303 the data file is processed using the activated implementation module.

Thus, the data file can be processed using an implementation module which is compatible with a processing element activating the implementation module, for example a server installation operating application.

In the prior art, via use of the data file type of the data file, selection of one of a plurality of implementation modules would not be possible. An activation request from an application, such as a text processing application located at a server unit, would always lead to an activation of the same implementation module, if only the data file type can be used for the activation operation.

As opposed thereto, the present application allows the activation of one of a plurality of implementation modules by using the concept of sub file types associated wit the different implementation modules. A server installation operating application, such as a version, instance of a version or modification of a text processing application, can thus select an appropriate one of the implementation modules by issuing an activation instruction using an appropriate sub file type.

In the following a further embodiment of the invention will be described with respect to Fig. 4.

Fig. 4 shows operations of a method for handling a data file having a specific data file type, particularly showing operations at a server unit, such as the server unit 230 shown in Fig. 2. However, Fig. 4 is not limited thereto.

In a first operation 401 it is selected one of a plurality of sub file types for each one of the plurality of implementation modules for processing the data file, the implementation modules to be located at the client unit. For example, the implementation modules can be already located at the client unit or can be transferred to the client unit at any point in time, e.g. through use of a data carrier, a network connection or similar.

Before that, a sub file type for each one of a plurality of implementation modules for processing the data file may be generated. In this case it should be ensured that each sub file type assigned to an implementation module is unique, in order to avoid ambiguities. A unique sub file type can be, for example, generated locally at a server unit or dispensed by a central location according to some name generation scheme, or one of a plurality of available sub files tiles could be checked out from a database, indicating that this sub file type is in use for an implementation module.

Further to sub file types, unique names for the implementation modules may be generated, e.g. for facilitating local handling of the implementation modules, for example, at a client unit.

An implementation module may thus be handled, e.g. stored, moved, updated and similar, using its unique name, whereas an implementation module can be activated through use of the sub file type.

In an operation 402 activation of one of the implementation modules using its sub file type is effected. For example, a server installation operating application, e.g. a version, instance of a version or modification of a text processing application, may generate an activation instruction including a sub file type of an implementation module compatible with the specific server installation operating application and transmit same to a client unit. The client unit will then activate the corresponding implementation module.

In an operation 403 processing of the data file using the activated implementation module is effected, e.g. at a client unit, as outlined before. For example, processing the data file may include displaying part of a data file at the client unit or similar.

In the following a further embodiment of the invention will be described with respect to Fig. 5.

Fig. 5 shows elements of a system for processing a data file having a specific data file type according to another embodiment of the invention, particularly showing a client and server scenario. The embodiment of Fig. 5 illustrates how a data file having a specific file type can be processed at a client unit using sub file types of a plurality of implementation modules.

Fig. 5 shows a client unit 500 including a plurality of client installation operating applications 510, 520 and 530. The client installation operating applications respectively include implementation modules 511, 521 and 531.

Further, the client unit 500 is in communication with a plurality of server units 550, 560 and 570. the server unit 550 includes a server installation operating application 551, the server unit 560 includes a server installation operating application 561 and the server unit 570 includes a server installation operating application 571.

The client unit in engaged in communication sessions with each of the server units 550, 560 and 570, as indicated by the double arrows 581, 582 and 583.

The client unit may be any kind of data processing device, such as a general data processing unit, a personal computer, a laptop computer, a mobile computing device such as a mobile telephone, a palmtop computing device or similar.

Further, the client unit may be operated by user obtaining processing services from the server units 550, 560 and 570. The server units may provide resources for any kind of application, such as text processing applications, spreadsheet applications, banking applications, scientific applications, communication applications and similar. For example, the user could have access to an office suite, i.e. office application programs, and/or the user could have access to personal applications at the server units , from any remote location through any kind of client unit, such as a personal computer, a palmtop computer, a mobile phone or similar.

A main part of an operation application, e.g. modules of the application requiring substantial resources, may be located at the server units, and therefore the client unit may not need extensive processing resources. The implementation modules provided at the client unit may provide any kind of processing services in association with the data file, including display operations for displaying the data file or information in association with the data file on a screen accessible through the client unit, or may perform any further processing of parameters associated with a data file, commands and similar data.

The client installation operating applications 510, 520 and 530 may be versions, instances of versions or modifications of a client operating application for enabling a communication session with a server unit.

While the client installation operating applications 510, 520 and 530 may be identical, it is possible that they each constitute a different installation, e.g. version, instance of a version or modification, being adapted to communicate with a specific one of the server units 550, 560 and 570. The client unit 500 may include further operating software, e.g. a operating system for cooperation with the client installation operating applications.

Each of the client installation operating applications is associated with or includes at least one implementation module, as outlined before.

The client unit communicates with the server units, as indicated by arrows 581, 582 and 583. Communications may be established through communication networks, dedicated communication links or combinations thereof, and may include wireless transmission. For example, a communication session between the client unit and a server unit may be established through use of the Internet and/or local area networks and/or dedicated communication links, such as telephone lines or similar.

The server units 550, 560 and 570 may be any kind of data processing unit, preferably providing processing resources for a potentially larger number of clients. For example, each server unit could provide standard office applications and/or standard private communication applications, banking applications and similar data for remote users at client units.

As outlined before, each server unit may establish this functionality through at least one server installation operating application. The server installation operation applications may be versions, instances of versions or modifications of an operating application. Thus, as an example, a user operating the client unit could be engaged in a text editing operation involving the server unit 550, 560 and/or 570. However, as the server units may have different or specific installation operating applications, i.e. different versions or modifications of an operating application for providing a certain service, the client unit is required to have compatible processing elements adapted to cooperate with the respective server units, i.e. the implementation modules. Thus, compatibility and cooperation is ensured between the client installation operating applications and implementation modules at the client unit, being arranged for cooperation with the respective server units.

Further, since an implementation module is associated with a specific sub file type, a server installation operating application may always activate the compatible implementation module by using the appropriate sub file.

For example, the server installation operating application 551 preferably uses a sub file type associated with the implementation module 511, in order to effect handling the data file, e.g. display operations or similar. Likewise, the server installation operating application 561 preferably always uses the sub file type associated with the implementation module 521, to ensure compatibility. The sub file type of the associated implementation module could be transmitted from a server unit with a service request, the service request further specifying the data file to be processed or specifying processing results of the data file for further handling.

The server units may each be responsible for generating the sub file type for the associated one of the implementation modules at the client unit. The server units could generate the sub file types based on any name giving algorithm, as outlined above. Thus, server unit 550 could be responsible for generating the sub file type for the implementation module 511, server unit 560 could be responsible for generating the sub file type for the implementation module 521, and server unit 570 could be responsible for generating the sub file type for the implementation module 531. The sub file types could be generated based on the processor IDs of the server units, IP addresses and similar.

According to another example, the server control unit selects one of plurality of sub file types for each one of the plurality of implementation modules for processing the data file, the implementation modules being located at the client unit; and the server installation operating application transmits the sub file type to the client unit for effecting activation of a corresponding one of the implementation modules, the activated implementation module being adapted to process the data file.

The server control unit may further generate the sub file types for each one of the plurality of implementation modules and may obtain a unique name for the implementation module corresponding to the sub file type.

The server installation operating application may transmit information about a sub file type to a client unit, instructing the client unit to register the sub file type to the implementation module. Further, a configuration file may be used to provide the sub file type.

In a further example, the client installation operating applications may be constituted by or include a browser application. A browser application, as known in the art, can be any program or group of application programs allowing a convenient browsing to information or data available in network environments, such as the Internet or any other network including local area networks. A browser application generally allows to view, download data and allows to transmit data between data processing devices.

The browser application may be adapted to receive a activation instruction from the server units 550, 560 and 570 related to the handling of a data file. The activation instruction may specify a data file having a specific file type. Further, the activation instruction preferably specifies a sub file type for appropriate selection of an implementation module.

As an example, in a distributed environment such as the Internet, a data file type may be a MIME type and the sub file type may be a special MIME type. A MIME (multi purpose Internet mail extension) specifies a commonly known method for transmitting data files via computer networks, such as the Internet, e.g. using e-mail services or similar. MIME leads to an encoding of the data file using one of available encoding methods at the sending side and leads to a decoding of the data file into its original format at the receiving end. A MIME header may be added to the data file including the MIME type, i.e. the data file type contained, and the encoding method used.

Normally, a MIME type triggers the activation of a particular module or modules at the receiving end for handling the data file. A MIME type may specify that the data file is a text document, video information or any other kind of information. A transmission of information using a MIME type generally leads to the selection of a module for handling a data file at the receiving end based on the MIME type. Thus, in the case of a specific MIME type the receiving end will always select a specific module for handling the data file.

This, however, may lead to a problem, if the source of the transmission is incompatible with the module selected based on the MIME type.

Thus, the present example employs the special functionality of the implementation modules by defining special MIME types corresponding to the sub file types. A source of a service instruction, such a text processing application triggering a display of a data file at a client unit may use a special MIME type or sub-MIME type corresponding to the sub file type for activating a specific one of the implementation modules available at the client unit, thus ensuring a compatibility between the different processing elements for handling a data file.

According to another example, the implementation modules may be constituted or include a piece of software sometimes termed plug-in. Further, the implementation modules may be constituted by activeX controls. A browser application, appropriately configured where equipped with appropriate plug-ins or activeX controls may be enhanced with further functionality to access or process specific kinds of information available in a distributed system, such as text documents, video information, audio information and any other kind of information in specialized formats. A plug-in or activeX control may be a piece of software or hardware to be used in connection with a larger application program for providing a specific additional service, such as special text editing, special spread sheet application and similar. Further, a plug-in may enhance a functionality of a browser application for browsing through information available on a network of computing devices. Accordingly, a plug-in may generally be software which can be added to any kind of larger software application, such as a browser application, the above exemplary text processing application or any other service or operating application. A plug-in adds a defined functionality to the larger software application, for example, visualization capabilities for certain types of documents, specific processing capabilities or similar. Further, plug-ins may generally be added the larger software application at any desired time, provided that the larger software application is equipped to receive and integrate the plug-in. The code for the plug-in may be obtained from any source, such over a computer network, from a data storage medium or similar. Alternatively, a plug-in may also be a piece of hardware adding functionality to an application or larger hardware structure.

Examples of plug-ins may include
- applications for displaying text information, such a Acrobat Reader for displaying files in the PDF-format,
- applications for displaying images in the TIFF-format, JPED-format or similar,
- MPEG (moving pictures expert group)-player for playback of videos in the MPRG-format,
- audio-player for playback of digital sound files, like in the WAV-format, MP3-format or similar,
- applications enabling user interaction for drawing operation, editing operations and similar,
- JAVA applets,
- activeX controls,
- software applications for remote visualization, such as the remote visualization process protocol (RVP). RVP is high-level definition of a graphic device defined as a set of interfaces. RVP is based completely on a component infrastructure. This gives RVP the ability to map functionality which a client system or browser is unable to support, to a service component on a server side emulating this functionality, or
- run-time environment component services, to ensure convenient access from a fist computer system to resources available and a second computer system. An example of a run-time environment component service is disclosed in the European Patent Application EP 0100136.9, entitled "Run-time environment component services" and filed January 5, 2001, which is incorporated herein by reference.

Thus, in the present example the implementation modules can be constituted by implementation plug-ins, registered to the sub file types, each of the sub file types being used by a specific installation operating application of a server unit, in order to ensure compatibility.

A service request transmitted from a server unit to the client unit for activating an implementation module may be in a HTML-format and may include an embedded element specifying the special MIME-type, i.e. the sub file type. Thus, the implementation modules may be implemented in a known network environment, such as the Internet.

One of the server units or a further registration unit or some or all server units together may be responsible for generating or distributing the sub file types for each of the implementation modules. Further, this server unit or registration unit may generate a unique name for specifying the implementation module, for easier internal reference. However, it is also possible that the client unit provides a sub file type for each implementation module and/or generates unique names for the implementation modules, e.g. for local handling in a file system.

In any case it may be preferred that the sub file types are globally unique, i.e. a server unit or installation operating application using a particular sub file type should be able to rely on an activation of the correct implementation module at the client unit.

The sub file types for the implementation modules may be dynamically generated during installation of the server installation operating application, and, upon installation of a corresponding client installation operating application, the sub file type may be registered to the respective implementation modules. The registering operation may be a manipulation operation applied to the modules, and/or by entering registration information into a registry, or similar. The implementation modules or information on the implementation modules, and information on the sub file types may be transmitted from a server unit or other source to the client unit, for instructing the client unit to perform the registration operation.

This information may be transmitted upon installation of the client unit, either via a communication session established between the client unit and a server unit, or may be transmitted at any other point in time. Further, a first part of the client installation could be effected through use of a data carrier, e.g. a CD-ROM, while the registration of sub file types to implementation modules and/or the unique names is performed at a later point in time, e.g. upon establishing a first communication session between the client unit and a serer unit.

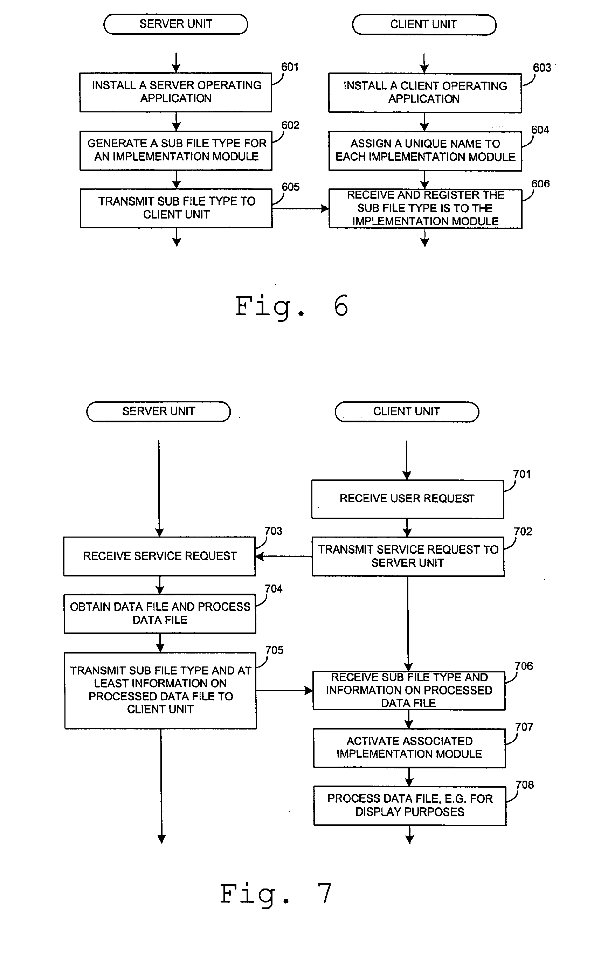

In the following a further embodiment of the invention will be described with respect to Fig. 6.

Fig. 6 particularly outlines operations for installing a server installation operating application and client installation operating application.

The operations shown in Fig. 6 may be carried out using the system shown in Fig. 5, however, Fig. 6 is not limited thereto.

The operations outline how sub file types for implementation modules may be introduced, for facilitating activation of a compatible one of a plurality of implementation modules available at the client unit.

In a first operation 601 a server installation operating application is installed at a server unit. This may involve installing an operating system or parts of an operating system and/or service applications at a server unit, such as a server unit shown in Fig. 2 and 5. The server installation operating application may be installed upon initial setup of a server unit, or upon reconfiguration of an existing server unit.

In an operation 602 sub file types for available implementation modules are generated. This may include generating a unique sub file type, for example, based on a processor ID and/or an IP address or similar. Thus, each server unit, e.g. during installation, could generated a sub file type for the implementation module or modules associated with the server unit. The sub file types could also be obtained in cooperation with a central registry or similar, as outlined before.

At a client unit, such as the client unit shown and described with respect to previous embodiments, a client installation operating application is installed. The client installation operating application may be part of an operating system of a client unit, or part of a service application for handling a data file. The operating 603 may be commenced generally at any pointing time, independent from operation 601. However, it is also possible that the client installation operating application is installed under control of the server unit, e.g. in connection with a communication session established between the server unit and the client unit.

In an operation 604 a unique name is assigned to each implementation module, e.g. for internal handling of the implementation modules in a file system at the client unit. Operation 604 may, however, also be executed at the server unit or at any other entity. While the sub file type for an implementation module must be globally unique, a name for an implementation module may only be locally be unique, e.g. within the file system of the client unit.

However, it may be preferred that the names for the implementation modules are globally unique, to avoid ambiguity.

In an operation 605 at the server unit the sub file type or types are transmitted to the client unit. This transmission may take place during a communication session between the server unit and the client unit, e.g. a communication session established for installing a client installation operating application at the client unit. However, it is also possible that the sub file types are transmitted via any other medium, such as a data carrier or similar.

In an operation 606 at the client unit the sub file type or types are received and registered through the implementation module or modules, as outlined before.

Accordingly, upon generating a service request in connection with the handling of a particular data file, a defined sub file type may be used to activate a compatible one of the implementation modules available at the client unit.

According to another example, and for further illustration, a plurality of processing units, e.g., a composite of processing units, may be considered. This composite or any other group of processing units may include server units and a client unit, the server units for communication with the client unit.

The group or composite of processing units may be arranged for effecting processing of a data file having or using a specific file type, as outlined above. The composite of processing units may include more than one server unit enabled to provide at least one sub-file type for at least one implementation module. Further, the composite of processing units may include a client unit including at least one client control, and at least one temporary client installation application for each provided sub-file type.

The client installation applications may be enabled to install implementation modules and/or client installation operating applications to the client; obtain a sub-file type or the implementation module from one of the server units or from a configuration file; registered the sub-file type to the implementation module and registered the implementation module with this sub-file type to the client control. The implementation modules may each be adapted to at least cooperate with one of the server units. After installing an implementation module for each of the provided sub-file types, a plurality of implementation modules result at the client unit.

Accordingly, each particular server unit may be adapted to provide a sub-file type for implementation module adapted to cooperate with this particular server unit, the implementation module being located at a client unit. In order to facilitate activation of the implementation module from the server unit, the client unit preferably register the sub-file type to the implementation module, e.g. in an installation operation at the client unit. This sub-file type may be obtained from the particular server unit or a configuration file.

Accordingly, after attending to each server unit, a plurality of implementation modules may be installed at the client unit, each implementation module having a particular sub-file type registered thereto, and thus the sub-file type can be used by the respective server unit for activation of the appropriate implementation module.

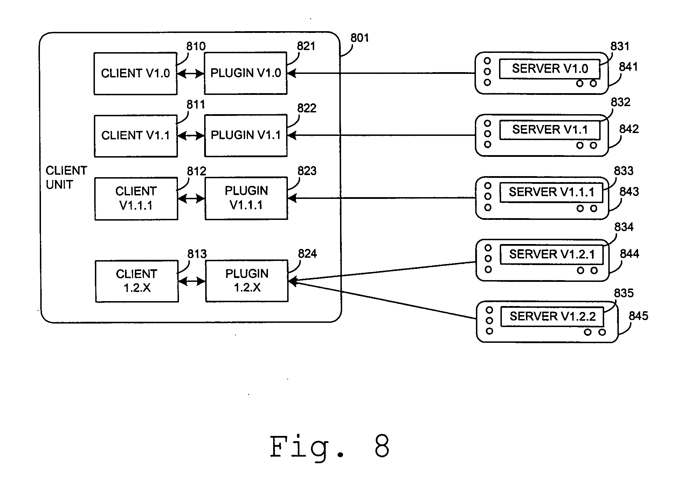

In the following a further embodiment of the invention will be described with respect to Fig. 7.

Fig. 7 particularly outlines operations at a server unit and a client unit for processing a data file having a specific file type. The operation shown in Fig. 7 may be executed by the system shown in Fig. 5, however, the embodiment of Fig. 7 is not limited thereto.

In a first operation 701 a service request is received at a client unit such as the client unit shown in Fig. 5. The service request may either be received from a user, operating the data processing device, or may be received from another application program. The service request may include an instruction to process a data file, using any processing operation, e.g. editing the data file, processing information included in the data file, transferring the data file, generating screen elements on a display or similar.

As an example, a user could enter a service request instruction through a keyboard connected to the control unit of the client unit, for example by specifying a data file and a type of service requested, or could input a corresponding command by dragging an icon representing a data file into a designated instruction field, leading to a generation of the corresponding service request.

This service request then specifies a data file with a data file name and may specify a data file type for further specifying the format of the data file. For example, a data file type could be specified by a file extension or other indicator and could show that the data file has a particular format, content or any other characteristics. As an example, the data file could be a text document.

Still further, the service request could specify a specific service or functionality requested, e.g. a particular processing to be performed with the data file. Such an indication of a requested service or functionality to be performed with a data file could be derived from a file extension, or could be explicitly included in the service request. As an example, the requested service could relate to editing the text document.

A data file type can specify any kind of format of the data file, including known document format, may specify specific contents of the data file where functionality to be executed with the data file, including functionality for visualization purposes in distributed environments.

In an operation 702 the service request is transmitted to the server unit. Transmission may be accomplished through any kind of communication, including communication networks, communication links, and wireless transmissions.

In an operation 703 the service request is received at the server unit, such as one of the server units described with respect to previous embodiments. The service request will be examined and the requested service will be determined, e.g. a text editing operation.

In an operation 704, in correspondence to the requested service, the data file is obtained and appropriately processed. This my include any kind of modifying operation, rearrangement operation or similar related to information included in the data file. As an example, the processing operation 704 could include preparing a text document for display at a client unit. This may include rendering operations for adapting the data file to a screen size or format or other characteristics of a display unit at the client unit.

In an operation 705 a sub file type of an implementation module compatible with the server unit is selected and transmitted together with at least information on the processed data file to the client unit. The sub file type preferably allows to specify an implementation module being compatible with the application or version of an application used for processing the data file at the server unit. Further, the sub file type could specify an implementation module compatible with an operating application at the server unit, i.e., a version or modification of an operating unit at the server unit.

The transmission may then be accomplished via any kind of communication, including a transfer employing the HTTP-protocol and/or sub-MIME types as outlined before.

In an operation 706 the sub file type and information on the processed data file is received at the client unit. Based on the sub file type and based on registration information generated earlier at the client unit, an appropriate one of the implementation modules is selected at the client unit for processing the data file. As described before in detail, this implementation module is preferably compatible with the server unit involved in handling the data file.

In an operation 707 the implementation module associated with the sub file type is activated and in an operation 708 the data file is processed, e.g. for display purposes. For example, in the above example of an editing operation of a text document, the implementation module could provide a display of portions of the data file at the client unit.

While Fig. 7 only shows a single server unit involved in a communication with the client unit, it is possible that further server units having further installation versions for modifications of an installation application are communicating with the client unit. These further server units, if running different software, may use further sub file types for activating appropriate ones of the implementation modules at the client unit.

Thus, the client unit can cooperate with different software versions of modifications at server units without requiring a downward compatibility of a software module at the client unit. Instead, different parallel and independent implementation modules having independent sub file types are provided for use by different server units.

According to another example, a processing unit may be adapted to process a data file or data block using a specific file type. The processing unit may include a plurality of implementation modules for processing the data file, each of the implementation modules being registered with a sub file type to a client control unit. The client control unit is then enabled to effect activation of one of the implementation modules upon receiving a request containing one of the sub file types. The activated implementation module can then be used to process the data file, as outlined with respect to previous embodiments.

According to yet another example, the processing unit may include at least one temporary one or more client installation applications, which install a client installation operating application and at least one implementation module. The client installation application may be adapted to receive from a server unit or a configuration file a sub-file type for each implementation module to be installed.

The client installation application may further be adapted to obtain a unique name corresponding to these sub-file type for each implementation module to be installed.

Still further, the client installation application may be adapted to register these sub-file type to the associated implementation module.

And, the client installation application may be adapted to register the implementation modules with their sub-file types to one or more client control units.

These sub-file types may be generated during installation of a server installation operating application or at any other point in time.

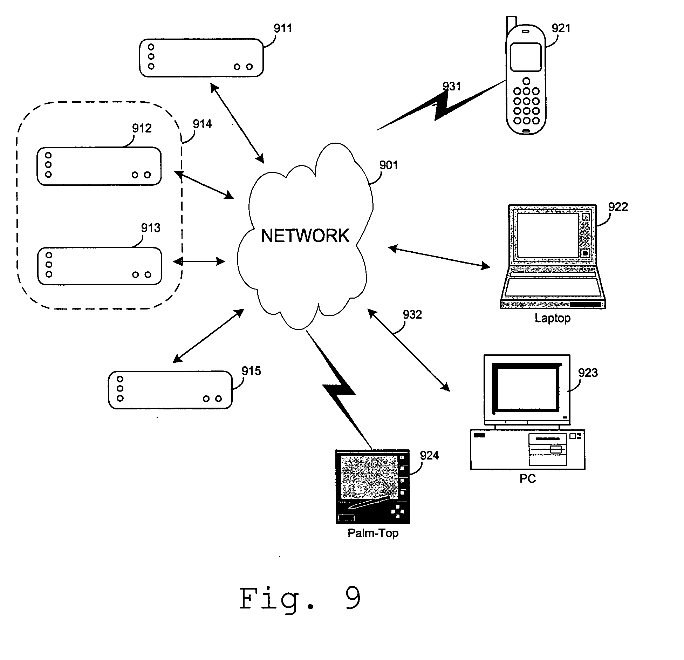

In the following a further embodiment of the invention will be described with respect to Fig. 8.

Fig. 8 shows elements of a system for handling a data file having a specific file type according to another embodiment of the invention, again outlining a client and server scenario.

In the embodiment of Fig. 8 the client unit is adapted to cooperate with a plurality of different server units.

As outlined before, independent sets of client installation operating applications, implementation plug-ins and server installation operating applications may be provided for ensuring proper cooperation in providing a service without requiring downward compatibility.

Fig. 8 show a client unit 801 including a plurality of client installation operating applications or client versions 810, 811, 812 and 812. Further, the client unit 801 includes a plurality of implementation modules or plug-in version 821, 822, 823 and 824.

Still further, Fig. 8 shows a plurality of server units 841, 842, 843, 844 and 845. Each of the server units includes a server installation operating application or server version 831, 832, 933, 934 and 835.

Fig. 8 illustrates a plurality of constellations of client versions, plug-in versions and server versions, arranged for cooperating with one another for providing a service to user, or providing a service to another application program. The server units and the client unit communicate with one another via any kind of communication, and, for activating an appropriate on of the plug-in versions, the sub file type of the respective plug-in version is used in service requests or activation instructions issued by the server unit.

According to a first example the client version 810 is constituted by a software version 1.0 and is adapted to cooperate with the plug-in version 821 having also the software version 1.0. The client version 810 and the plug-in version 821 are adapted to cooperate with the server version 831 having also the software version 1.0, residing on the server unit 841.

In operation, in order to ensure that the server unit 841 running the server version 1.0 always activates the plug-in version 1.0 and the client unit, a specific and unique sub file type for the plug-in version 1.0 can used by the server unit 841. Thus, if a plurality of activation instructions are transmitted from a plurality of server units to the client unit, the correct plug-in version can be selected at the client unit, based on the sub file type included in the activation request.

Similar to the above example, in Fig. 8 a client version 811 having a software version 1.1 is arranged to cooperate with a plug-in version 822 having a software version 1.1. Further, the client version 811 and plug-in version 822 are arranged to cooperate with a server unit 842 running a server version 832, also having the software version 1.1. As before, the server 842 will always use specific sub file type for transmission of activation requests, in order to always address the plug-in version 822 at the client unit.

Thus, if again the text editing example is considered, an activation instruction to display a data file at the client unit originating from the server 841 will include a sub file type of the plug-in version 821, whereas an activation instruction for displaying the data file originating from the server unit 842 will include the sub file type of the plug-in version 822.

A similar constellation is possible not only for software versions, but also for instances of software versions, as shown in the following example.

The client version 812 having the instance of a software version 1.1 is arranged to cooperate with a plug-in version 823, having the instance 1.1.1. The client version 812 and plug-in version 823 are arranged to cooperate with the server unit 843 running the server version 833 having also the instance 1.1.1. Any activation instruction, e.g. for displaying a text document, will include a corresponding sub file type, for always ensuring activation of the plug-in version 823 having the instance 1.1.1.

Further thereto, it is also possible that different server versions are arranged to cooperate with a single client and plug-in version, as outlined in the following example.

The client version 813 is compatible with any instance of the version 1.2., i.e., has the version 1.2.X. This client version 813 is cooperating with a plug-in version 824 being compatible with all instances of the version 1.2, i.e., having a version 1.2.X. The client version 813 and the plug-in version 824 are arranged to cooperate with two server units 844 and 845. The server unit 844 runs a software version 834 having the instance 1.2.1. Further, the server unit 845 runs a software version 835 having the instance 1.2.2.

During operation, the server units 844 and 845 may use the same sub file type for activation instructions, e.g. to display a data file, since the plug-in version 824 and the client version 813 can cooperate with both server versions 834 and 835.

The examples of Fig. 8 show how the concept of different sub file types can be used to activate different plug-in versions, e.g. different versions or modifications of a plug-in for displaying a data file.

It is noted that while in each case one plug-in version is shown, a plurality of plug-in versions for different functionality may be provided in association with a client version and server version.

In the following a further embodiment of the invention will be described with respect to Fig. 9. Fig. 9 shows elements of a system for processing a data file having a specific file type according another embodiment of the invention, particularly illustrating a network arrangement including a variety of different client units and a plurality of server units.

A network 901 is provided for enabling a communication between the individual elements of the system shown in Fig. 9. The network 901 may be any kind of network for connecting the processing elements, such as a circuit switch network or a packet switch network. Further, the network 901 may include a plurality of different networks, e.g. a local area network, a wide area network, such as the Internet, and other networks, such as telephone networks, including telephone networks with dedicated communication links, connection-less networks and wireless networks.

Further, Fig. 9 shows examples of client units, including a mobile phone 921, a laptop computer 922, a personal computer 923 and a palmtop 924.

Further, Fig. 9 shows four server units 911, 912, 913 and 915. The server units may be operated by different providers or vendors. For example, a fist vendor or provider may operate the server unit 911, and another provider or vendor may operate the server unit 915. Moreover, another vendor or provider may operate the two servers 912 and 913, as illustrated by a box 914.

Each of the individual units shown in Fig. 9 is connected to the network 901 via any kind of communication link, included dedicated communication lines, connection links and wireless communication links.

For example, the mobile phone 921 may preferably connected to the network 901 via a wireless communication link 931, whereas the personal computer 923 will preferably be connected to the network 901 via communication link, which includes a fixed transmission line, e.g., to a household or office.

The mobile phone 921 may be any kind of mobile telephone or terminal, being equipped with hardware and/or software, for enabling the mobile telephone 921 to function as a client unit as outlined with respect to any of the previous embodiments.

Further, the mobile phone 921 may be equipped with a control unit for receiving a service request to process a data file, e.g. input through the keys of the mobile phone or through voice commands. For example, a service request could concern a display of directory information as in the mobile phone. Further, the mobile phone probably includes a plurality of implementation modules of plug-ins to be activated via associated sub file types. Thus, an implementation module can be selected which is compatible with specific services provided by different telephone network operators or service providers. Further, the implementation modules may be compatible with different versions of operating software at the server unit shown in Fig 9, as particularly outlined with respect to Fig. 8.

Further, the laptop computer 922 and the personal computer 923 nay be any kind of personal, laptop or mobile computing device connected to the network 901, and equipped with appropriate hardware and/or software for enabling a functionality as described with respect to previous embodiments. Different implementation modules will be provided for cooperation with different server versions, application programs etc.. This could include modules for visualization, text processing, scientific applications and similar.

Finally, the palmtop 924 may be any kind of palmtop computer, equipped with appropriate hardware and/or software for enabling a functionality as outlined with respect to previous embodiments. For example, the palmtop could have implementation modules installed, for cooperation with different versions of calendar applications, e.g. provided by different service providers or implementation modules for cooperation with different information services provided by or in different countries, for example, to display different characters, such as Latin characters, Chinese and similar.

The server units 911, 912, 913 and 915 may be any kind of server devices providing a functionality outlined with respect to previous embodiments. For example, the server 911 could have an operating system of a first version of sub-version, a version or sub-version may be any kind of modification of an operating program of a server unit, e.g. one of a release version of an operating program provided by a specific vendor or manufacturer. Further, the version could be a modification of an operating program, for example of providers offering specific services.

Each of the client units 921. 921, 923 and 924 are preferably equipped with implementation modules compatible with the version of the operating program of the server 911. Similar applies to any other application program implemented at the server unit 911, e.g. each of the client units is equipped with implementation modules compatible with a specific version of an application program at the server unit 911. The other server units 912, 913 and 915 may one or all be equipped with further versions of the operating program of application program, for cooperation with further implementation modules at the client units.

While Fig. 9 shows four examples of client units, it is understood that any other client unit could be provided.

The embodiment described with respect to Fig. 9 particularly illustrates how a quality of different server units and client units may cooperate with another while ensuring full compatibility.

In the following a further example of the elements of a processing unit for processing a data file will be outlined.
1). Processing unit for processing a data file having a specific file type, including
   code sections having instructions of a plurality of implementation modules for processing the data file;
   a code section having instructions to obtain a sub file type for each implementation module and for effecting activation of one of the implementation modules using its sub file type; and
   wherein the activated implementation module is adapted to process the data file.
2). Processing unit of 1), wherein the implementation modules constitute code sections of one of different release versions of a module, instances of a version of a module and modifications of a module.
3). Processing unit of 1), wherein the implementation modules constitute code sections adapted to cooperate with specific installation operating code sections.
4). Processing unit of 1), wherein the installation operating code sections constitute one of the group consisting of:
   - release versions of an operating code section;
   - instances of release versions of an operating code section; and
   - modifications of an operating code section.
5). Processing unit of 1), including a code section having instructions adapted to receive from a server unit or configuration file information about a sub file type to be registered to the implementation module.
6). Method of 1), including a code section having instructions adapted to obtain a unique name for the implementation module corresponding to the sub file type.
7). Processing unit of 1), including a code section having instructions adapted to register, upon installation of a client installation operating application, the sub file type for an implementation module to the implementation module, the sub file type being dynamically generated during installation of a server installation operating application.
8). Processing unit of 1), including a code section having instructions adapted to activate an implementation module in response to receiving an instruction including the sub file type registered to the implementation module.
9). Processing unit of 1), wherein
   the processing unit constitutes a client unit for communication with a server unit, the server unit having a server installation operating code section; and
   including a client installation operating code section and an implementation module cooperating with the server installation operating code section; and
   wherein the client installation operating code section and the server installation operating code section constitute one of the group consisting of
   - release versions of an operating code section;
   - instances of release versions of an operating code section; and
   - modifications of an operating code section.
10). Processing unit of 1), wherein
   the processing unit constitutes a client unit for communication with a plurality of server units; and
   the client unit includes at least one client installation operating code section, each cooperating with at least one server installation operating code section.
11). Processing unit of 1), including a browser code section and wherein the implementation module is constituted by an implementation plug-in.
12). Processing unit of 1), wherein the data file includes at least one of or a combination of:
   - any collection of data in any form;
   - a command; and
   - a command together with additional parameters.
13). Processing unit of 1), wherein the processing of the data file includes at least one of
   - executing any action as reaction on receiving the data file;
   - manipulating or editing the data file;
   - processing information included in the data file;
   - transferring the data file; and
   - remote visualization.

   In the following a further example of the elements of a server unit for effecting processing a data file will be outlined.
14). Server unit for effecting processing of a data file having a specific file type, including
   a code section having instructions to obtain a sub file type of one of a plurality of implementation modules for processing the data file, the implementation modules to be located at a client unit; and
   a server installation operating code section for transmitting the sub file type to the client unit for effecting activation of a corresponding one of the implementation modules, the activated implementation module being adapted to process the data file.
15). Server unit of 14), including a code section having instructions to generate the sub file types for at least one of the plurality of implementation modules.
16). Server unit of 14), wherein the server installation operating code section is adapted to transmit information about a sub file type to a client unit, instructing the client unit to register the sub file type to the implementation module.
17). Server unit of 14), including
   a code section having instructions to generate the sub file type for the implementation module; and
   a code section having instructions to obtain a unique name for the implementation module corresponding to the sub file type.

## Claims

1. Method for processing a data file having a specific file type, including
obtaining a sub file type for each one of a plurality of implementation modules for processing the data file;
activating one of the implementation modules using its sub file type; and
processing the data file using the activated implementation module.

2. Method of claim 1, wherein the implementation modules constitute one of different release versions of a module, instances of a version of a module and modifications of a module.

3. Method of at least one of the claims 1 or 2, wherein the implementation modules are adapted to cooperate with specific installation operating applications.

4. Method of at least one of the claims 1 - 3, wherein the installation operating applications constitute one of the group consisting of:
- release versions of an operating application;
- instances of release versions of an operating application; and
- modifications of an operating application.

5. Method of at least one of the claims 1 - 4, including receiving information about a sub file type to be registered to the implementation module.

6. Method of at least one of the claims 1 - 5, including obtaining a unique name for the implementation module corresponding to the sub file type.

7. Method of at least one of the claims 1 - 6, wherein a sub file type for an implementation module is dynamically generated during installation of a server installation operating application.

8. Method of at least one of the claims 1 - 7, wherein upon installation of a client installation operating application the sub file type is registered to the implementation module.

9. Method of at least one of the claims 1 - 8, wherein the implementation module is activated in response to receiving an instruction including the sub file type registered to the implementation module.

10. Method of at least one of the claims 1 - 9, wherein
a server installation operating application is located at a server unit; and
a client installation operating application and an implementation module are located at a client unit, for cooperating with the server installation operating application; and
wherein the client installation operating application and the server installation operating application constitute one of the group consisting of
- release versions of an operating application;
- instances of release versions of an operating application; and
- modifications of an operating application.

11. Method of at least one of the claims 1 - 10, wherein a client unit includes at least one client installation operating application, each cooperating with at least one server installation operating application.

12. Method of at least one of the claims 1 - 11, wherein a client unit includes a browser application and the implementation module is constituted by one of an implementation plug-in or activeX control.

13. Method of at least one of the claims 1 - 12, wherein the data file includes at least one of or a combination of:
- any collection of data in any form;
- a command; and
- a command together with additional parameters.

14. Method of at least one of the claims 1 - 13, wherein the processing of the data file includes at least one of
- executing any action as reaction on receiving the data file;
- manipulating or editing the data file;
- processing information included in the data file;
- transferring the data file; and
- remote visualization.

15. Method for processing a data file having a specific file type, including
obtaining a sub file type for one of a plurality implementation modules for processing the data file;
activating the implementation module using its sub file type; and
effect processing of the data file using the activated implementation module.

16. Method of claim 15, wherein the implementation modules constitute one of different release versions of a module, instances of a version of a module and modifications of a module.

17. Method of at least one of the claims 15 or 16, wherein the implementation modules are adapted to cooperate with specific installation operating applications.

18. Method of at least one of the claims 15 - 17, wherein the installation operating applications constitute one of the group consisting of:
- release versions of an operating application;
- instances of release versions of an operating application; and
- modifications of an operating application.

19. Method of at least one of the claims 15 - 18, including transmitting to a client unit information about a sub file type to be registered to the implementation module.

20. Method of at least one of the claims 15 - 19, including at least one of:
- generating the sub file type for the implementation module; and
- generating a unique name for the implementation module corresponding to the sub file type.

21. Method of at least one of the claims 15 - 20, including dynamically generating a sub file type for an implementation module during installation of a server installation operating application.

22. Method of at least one of the claims 15 - 21, including effecting registering the sub file type to the implementation module upon installation of a client operating application.

23. Method of at least one of the claims 15 - 22, including transmitting an instruction to activate the implementation module to a client unit, including the sub file type registered to the implementation module.

24. Method of at least one of the claims 15 - 23, wherein
a server installation operating application is located at a server unit; and
a client installation operating application and an implementation module are located at a client unit, for cooperating with the server installation operating application

25. A program having instructions adapted to cause data processing means to carry out the method of at least one of the claims 1 - 24.

26. A computer readable medium, in which a program is embodied, where the program is to make a computer execute the method of at least one of the claims 1 - 25.

27. A computer program product comprising the computer readable medium according to claim 26.

28. Processing unit for processing a data file having a specific file type, including
a plurality of implementation modules for processing the data file;
a client control unit for obtaining a sub file type for each implementation module and for effecting activation of one of the implementation modules using its sub file type; and
wherein the activated implementation module is adapted to process the data file.

29. Processing unit of claim 28, wherein the implementation modules constitute one of different release versions of a module, instances of a version of a module and modifications of a module.

30. Processing unit of at least one of the claims 28 or 29, wherein the implementation modules are adapted to cooperate with specific installation operating applications.

31. Processing unit of at least one of the claims 28 - 30, wherein the installation operating applications constitute one of the group consisting of:
- release versions of an operating application;
- instances of release versions of an operating application; and
- modifications of an operating application.

32. Processing unit of at least one of the claims 28 - 31, wherein the client control unit is adapted to receive information about a sub file type to be registered to the implementation module.

33. Method of at least one of the claims 28 - 32, wherein the client control unit is adapted to obtain a unique name for the implementation module corresponding to the sub file type.

34. Processing unit of at least one of the claims 28 - 33, wherein the client control unit is adapted to register, upon installation of a client installation operating application, the sub file type for an implementation module to the implementation module, the sub file type being dynamically generated during installation of a server installation operating application.

35. Processing unit of at least one of the claims 28 - 34, wherein the client control unit is adapted to activate an implementation module in response to receiving an instruction including the sub file type registered to the implementation module.

36. Processing unit of at least one of the claims 28 - 35, wherein
the processing unit constitutes a client unit for communication with a server unit, the server unit having a server installation operating application; and
including a client installation operating application and an implementation module cooperating with the server installation operating application; and
wherein the client installation operating application and the server installation operating application constitute one of the group consisting of
- release versions of an operating application;
- instances of release versions of an operating application; and
- modifications of an operating application.

37. Processing unit of at least one of the claims 28 - 36, wherein
the processing unit constitutes a client unit for communication with a plurality of server units; and
the client unit includes at least one client installation operating application, each cooperating with at least one server installation operating application.

38. Processing unit of at least one of the claims 28 - 37, including a browser application and wherein the implementation module is constituted by one of an implementation plug-in or activeX control.

39. Processing unit of at least one of the claims 28 - 38, wherein the data file -includes at least one of or a combination of:
- any collection of data in any form;
- a command; and
- a command together with additional parameters.

40. Processing unit of at least one of the claims 28 - 39, wherein the processing of the data file includes at least one of
- executing any action as reaction on receiving the data file;
- manipulating or editing the data file;
- processing information included in the data file;
- transferring the data file; and
- remote visualization.

41. Server unit for effecting processing of a data file having a specific file type, including
a server control unit for obtaining a sub file type for one of a plurality of implementation modules for processing the data file, the implementation modules to be located at a client unit; and
a server installation operating application for transmitting the sub file type to the client unit for effecting activation of a corresponding one of the implementation modules, the activated implementation module being adapted to process the data file.

42. Server unit of claim 41, wherein the server control unit is arranged to generate the sub file type for the at least one of the plurality of implementation modules.

43. Server unit of at least one of the claims 41 and 42, wherein the server installation operating application is adapted to transmit information about a sub file type to a client unit, instructing the client unit to register the sub file type to the implementation module.

44. Server unit of at least one of the claims 41 - 43, wherein the server control unit is adapted
to generate the sub file type for the implementation module; and
to obtain a unique name for the implementation module corresponding to the sub file type.
